**Europäisches Patentamt**

**European Patent Office**

**Office européen des brevets**

(19)

(11) Veröffentlichungsnummer : **0 363 620 B1**

(12) # EUROPÄISCHE PATENTSCHRIFT

(45) Veröffentlichungstag der Patentschrift :
04.11.92 Patentblatt 92/45

(51) Int. Cl.⁵ : **G01D 5/38**

(21) Anmeldenummer : **89116044.2**

(22) Anmeldetag : **31.08.89**

(54) **Photoelektrische Positionsmesseinrichtung.**

(30) Priorität : **12.10.88 DE 3834676**

(43) Veröffentlichungstag der Anmeldung :
**18.04.90 Patentblatt 90/16**

(45) Bekanntmachung des Hinweises auf die
Patenterteilung :
**04.11.92 Patentblatt 92/45**

(84) Benannte Vertragsstaaten :
**DE FR GB IT**

(56) Entgegenhaltungen :
**DE-C- 3 416 864**

(73) Patentinhaber : **Dr. Johannes Heidenhain
GmbH
Dr.-Johannes-Heidenhain-Strasse 5 Postfach
1260
W-8225 Traunreut (DE)**

(72) Erfinder : **Michel, Dieter, Dipl.-Ing.(FH)
Langauenstrasse 12
W-8220 Traunstein (DE)**

## Beschreibung

Die Erfindung bezieht sich auf eine Vorrichtung zur photoelektrischen Erzeugung von elektrischen Signalen bei Längen- oder Winkelmeßeinrichtungen gemäß dem Oberbegriff des Anspruches 1.

Derartige Meßeinrichtungen sind bekannt. Eine Positionsmeßeinrichtung der gattungsgemäßen Art ist in der DE-L-3416864- ausführlich abgehandelt worden.

Auch die Probleme, die solchen Positionsmeßeinrichtungen eigen sind wenn Referenzimpulse erzeugt werden sollen, sind dort bereits erwähnt und Lösungswege angegeben. Die Anordnung der Photodetektoren richtet sich dort nach der Wellenlänge des Lichtes sowie nach der Orientierung und den Gitterparametern der Phasengitter.

Eine weitere Anordnung dieser Kategorie ist in der DE-C-3541199 beschrieben.

Durch gebeugte Teilstrahlenbündel höherer Ordnung kann es jedoch zu Effekten kommen, die das Meßergebnis verschlechtern, wenn beispielsweise Teilstrahlenbündel höherer Ordnung auf Detektoren fallen, die anderen Teilstrahlenbündeln niederer Ordnung zugeordnet sind. Ferner kann es bei geometrischen und/oder optischen Veränderungen der Anordnung zu Fehlern kommen, wenn die einzelnen vorerwähnten Zuordnungen sich verschlechtern.

Der Erfindung liegt die Aufgabe zugrunde, bei einer gattungsgemäßen hochauflösenden Positionsmeßeinrichtung, die im Verhältnis zur Auflösung der Meßteilung einen sehr großen Abtastabstand besitzt, eine Referenzmarkenabtastung zu ermöglichen. Dabei soll die Vorrichtung unempfindlich gegenüber Verkippung, Verdrehung, Abtastabstandsänderung, Alterung der Lichtquelle und sonstigen Störfaktoren sein, so daß die eindeutige Zuordnung der Referenzmarken zur Abtastteilung stets erhalten bleibt.

Diese Aufgabe wird durch eine Vorrichtung mit den Merkmalen des Anspruches 1 gelöst.

Mit den in den abhängigen Ansprüchen angegebenen Merkmalen wird die Erfindung in besonders vorteilhafter Weise ausgestaltet.

Die besonderen Vorteile der erfindungsgemäßen Positionsmeßeinrichtung liegen in der Unempfindlichkeit gegenüber den vorstehend erwähnten Störfaktoren und somit in der deutlich höheren Betriebssicherheit, im guten Langzeitverhalten sowie in dem erzielbaren Verhältnis von der Auflösung (Signalpe-riode 4μm) zum Abtastabstand (2500μm).

Mit Hilfe eines Ausführungsbeispieles soll die Erfindung nachstehend anhand der Zeichnungen noch näher erläutert werden.

Es zeigt

Figur 1 einen Teilungsträger,

Figur 2 eine Ausschnittvergrößerung X des Meßteilungsträgers gemäß Figur 1,

Figur 3 ein Optikschema einer Vorrichtung zur Abtastung eines Meßteilungsträgers mit Ansichten der

Figur 3a Detektorplatine und

Figur 3b Abtastplatte mit Meßteilungsträger.

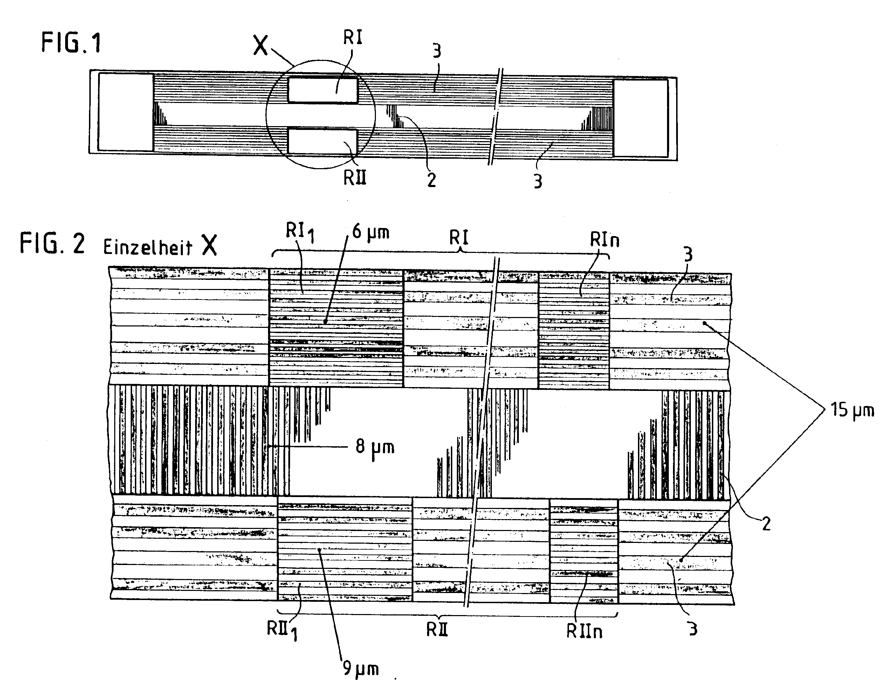

Figur 1 zeigt einen Teilungsträger 1, der in nicht näher spezifizierter, nicht dargestellter Weise an einem der Objekte, dessen Position gemessen werden soll, befestigt ist. Der Teilungsträger 1 trägt eine Meßteilung 2, die als Phasengitter ausgebildet ist. Die Tei-lungsperiode beträgt 8μm. Entlang der Meßteilung 2 erstreckt sich auf beiden Längsseiten je eine ebenfalls als Phasengitter ausgebildete Umfeldteilung 3, mit 15μm Teilungsperiode. Die Gitterlinien dieser Umfeldteilung 3 verlaufen senkrecht zu den Gitterlinien der Meßteilung 2.

An einer exponierten Stelle - dem sogenannten Eich- oder Bezugspunkt der Meßteilung - ist eine Referenzmarke RI bzw. sind zwei Referenzmarken RI und RII innerhalb der Umfeldteilung 3 angebracht.

Figur 2 zeigt als Einzelheit X eine vergrößerte Darstellung. Referenzmarken dienen zur Eichung von inkrementalen Meßsystemen, weil durch ihre zur Meßteilung absolut festliegende Lage jederzeit ein Bezugspunkt der inkrementalen Meßteilung reproduziert werden kann. Die Referenzmarken RI und RII bestehen aus einer Anzahl von Feldern $RI_{1...n}$ und $RII_{1...n}$, die innerhalb der Umfeldteilung 3 nach einem vorgegebenen Schema angeordnet sind. Näheres über die Ausgestaltung und Anordnung von derartigen Referenzmarken ist in der bereits genannten DE-C-3416864 nachzulesen.

Die Felder $RI_{1...n}$ und $RII_{1...n}$ weisen ebenfalls Gitterlinien auf, die senkrecht zu den Gitterlinien der Meßteilung 2 verlaufen, also in Meßrichtung. Die Gitter der Felder $RI_{1...n}$ haben eine Teilungsperiode von 6μm, die der Felder $RII_{1...n}$ haben eine Teilungsperio-de von 9μm. Zwischen den Feldern $RI_{1...n}$ bzw. $RII_{1...n}$ der Referenzmarken RI bzw. RII kommt jeweils die Umfeldteilung 3 zur Wirkung.

Die Referenzmarken RI und RII sind in Meßrichtung geringfügig zueinander versetzt, was zu einer besonderen Auswertung nach der Abtastung führt. Im Grunde sind versetzt angeordnete Referenzmarken bereits aus der DE-C-3509102 bekannt, allerdings sind dort nicht Referenzmarken der hier beschriebenen Art erwähnt.

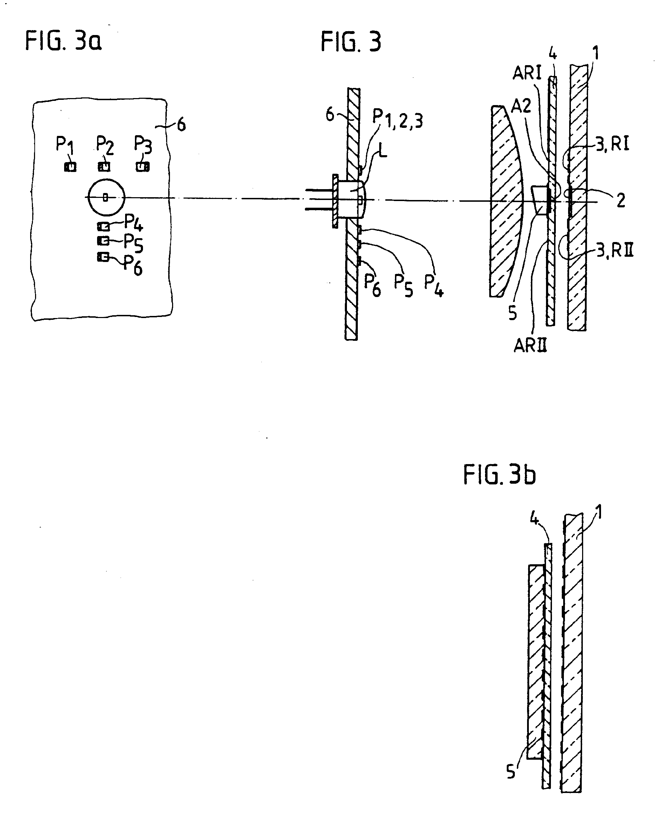

Die Abtastung des Teilungsträgers 1 erfolgt mit Hilfe einer Abtastplatte 4, die in Figur 3 und 3b schematisiert gezeigt ist. Die Abtastplatte 4 weist dazu Meßteilungs-Abtastfelder A2 und Referenzmarken-Abtastfelder ARI und ARII auf. Diese Abtastfelder A2, ARI und ARII sind im wesentlichen symmetrisch zu optischen Achse einer Beleuchtungseinrichtung L angeordnet.

Über dem Meßteilungs-Abtastfeld A2 ist ein quer zur Meßrichtung ablenkendes Prisma 5 angeordnet, durch das eine optische Trennung der Abtaststrahlengänge bei der Abtastung der Meßteilung 2 und der Referenzmarken RI und RII erreicht wird.

Es liegt im Rahmen der Erfindung, andere ablenkende Mittel anstelle des Prismas 5 zu verwenden. Auch die Zuordnung des ablenkenden Mittels zum Abtastfeld A2 der Meßteilung 2 ist nicht zwingend erforderlich, denn auch durch Zuordnung des ablenkenden Elementes zum Referenzmarken-Abtastfeld ARI und/oder ARII ist eine optische Trennung der Abtaststrahlengänge möglich. Die vorbeschriebenen Variationen wird der Fachmann bei der Realisierung sinnvoll abstimmen.

Figur 3a zeigt die Ansicht einer Platine 6 auf der die Beleuchtungseinrichtung L und Photodetektoren $P_1$ bis $P_6$ angeordnet sind. Auf die waagerechte Reihe der Photodetektoren $P_1$, $P_2$ und $P_3$ fallen gebeugte Teilstrahlenbündel der Beleuchtungsstrahlung mit einer Phasenverschiebung von jeweils 120° zueinander. Diese Teilstrahlenbündel sind durch Beugung an Gittern gemäß der EP-A-0163362 entstanden, wie sie durch die Meßteilung 2 und das zugehörige Abtastfeld A2 gebildet werden.

Von der Umfeldteilung 3 werden gebeugte Teilstrahlenbündel auf den Photodetektor $P_4$ geworfen, und auf die Photodetektoren $P_5$ bzw. $P_6$ treffen die gebeugten Teilstrahlenbündel, die durch die Referenzmarkenfelder $RII_{1...n}$ bzw. $RI_{1...n}$ abgebeugt worden sind (selbstverständlich immer im Zusammenwirken mit den zugehörigen Abtastfeldern ARII und ARI auf der Abtastplatte 4).

Die elektrische Zusammenfassung der durch die Referenzmarken RI und RII erzeugten Signale kann gemäß der DE-C-3509102 erfolgen, auf die ausdrücklich Bezug genommen wird.

Die erwähnten Teilungsperioden der Gitter haben sich in der Praxis als zweckmäßig erwiesen, jedoch soll die Erfindung selbstverständlich nicht auf diese Verhältnisse beschränkt sein.

**Patentansprüche**

1. Vorrichtung zur photoelektrischen Erzeugung von elektrischen Signalen bei Längen- oder Winkel meßeinrichtungen, mit wenigstens einer Beleuchtungseinrichtung (L), einem Teilungsträger (1) mit Feldern für die Meßteilung (2) mit Teilungsmarkierungen und Feldern für Referenzmarken (RI, RII) mit Teilungsmarkierungen, wobei zumindest einzelne Teilungsmarkierungen als Phasengitter ausgebildet sind, einer Abtastplatte (4) mit Abtastfeldern (A2, ARI, ARII) für die Meßteilung (2) und die Referenzmarken (RI, RII), mit mehreren Photodetektoren (P1...P6) und einer Auswerteschaltung, wobei die geometrische Anordnung der Photodetektoren (P1...P6), die zum Erfassen der von den Teilungsmarkierungen (2, $RI_{1...n}$, $RII_{1...n}$) gebeugten Strahlen vorgesehen sind, auf die Wellenlänge der Beleuchtungseinrichtung (L), die Orientierung und die Gitterparameter der Teilungsmarkierungen (2, $RI_{1...n}$, $RII_{1...n}$) abgestimmt sind, dadurch gekennzeichnet, daß die Abtastfelder (A2, ARI, ARII) für die Meßteilungs- und Referenzmarkenfelder (2, $RI_{1...n}$, $RII_{1...n}$) etwa symmetrisch zur optischen Achse der Beleuchtungseinrichtung (L) angeordnet sind, daß die Teilungsmarkierungen der Meßteilung (2) eine andere Orientierung aufweisen, als die Teilungsmarkierungen der Referenzmarkenfelder ($RI_{1...n}$, $RII_{1...n}$), wobei sie vorzugsweise senkrecht aufeinander stehen und daß die optische Trennung der an den Teilungsmarkierungen der Meßteilung (2) und den Referenzmarkenfeldern ($RI_{1...n}$, $RII_{1...n}$) gebeugten Abtaststrahlen durch quer zur Meßrichtung ablenkende optische Elemente erfolgt, die dem Meßteilungs- (A2) und-/oder den Referenzmarken-Abtastfeldern (ARI, ARII) der Abtastplatte zugeordnet sind.

2. Vorrichtung nach Anspruch 1, dadurch gekennzeichnet, daß das optisch ablenkende Element als Prisma (5) ausgeführt ist.

3. Vorrichtung nach Anspruch 1, dadurch gekennzeichnet, daß die Referenzmarken (RI, RII) von einer Umfeldteilung (3) umgeben sind.

4. Vorrichtung nach Anspruch 3, dadurch gekennzeichnet, daß die Gitterlinien der Referenzmarken (RI, RII) und der Umfeldteilung (3) die gleiche Orientierung, aber unterschiedliche Teilungsperioden aufweisen.

5. Vorrichtung nach Anspruch 1, dadurch gekennzeichnet, daß die Flächenschwerpunkte der Referenzmarken (RI, RII) auf dem Teilungsträger (1) in Meßrichtung zueinander einen geringfügigen Versatz aufweisen.

**Claims**

1. A device for photoelectric generation of electrical signals in length or angle measuring devices, with at least one illuminating device (L), a graduation carrier (1) with fields for the measuring graduation (2) having graduation markings and fields for reference marks (RI, RII) having reference markings, wherein at least some graduation markings are formed as a phase grating, a sensing plate (4) with sensing fields (A2, ARI, ARII) for the measuring graduation (2) and the reference marks (RI, RII), a plurality of photo-detectors (P1... P6) and an evaluating circuit, wherein the geometric arrangement of the photo-detectors (P1... P6) which are provided for detecting beams diffracted by the graduation markings (2, $RI_{1...n}$, $RII_{1...n}$) are adapted to the wavelength of the illuminating device (L), the orientation and the grating parameter of the graduation markings (2, $RI_{1...n}$, $RII_{1...n}$), characterized in that the sensing fields (A2, ARI, ARII) for the measuring graduation and reference mark fields (2, $RI_{1...n}$, $RII_{1...n}$) are arranged approximately symmetrically relative to the optical axis of the illuminating device (L), in that the graduation markings of the measuring graduation (2) have a different orientation from that of the graduation markings of the reference mark fields ($RI_{1...n}$, $RII_{1...n}$), preferably being perpendicular to one another, and in that the optical separation of the sensing beams diffracted at the graduation markings of the measuring graduation (2) and the reference mark fields ($RI_{1...n}$, $RII_{1...n}$) is effected by optical elements which deflect transversely to the measuring direction, these elements being associated with the measuring graduation (A2) and/or the reference mark sensing fields (ARI, ARII) of the sensing plate.

2. A device according to claim 1, characterized in that the optically deflecting element is formed as a prism (5).

3. A device according to claim 1, characterized in that the reference marks (RI, RII) are surrounded by a background graduation (3).

4. A device according to claim 3, characterized in that the grating lines of the reference marks (RI, RII) and of the background graduation (3) have the same orientation but different graduation periods.

5. A device according to claim 1, characterized in that the centroids of area of the reference marks (RI, RII) on the graduation carrier (1) have a slight offset relative to one another in the measuring direction.

**Revendications**

1. Dispositif de production par voie photo-électrique de signaux électriques dans des dispositifs de mesure de longueurs ou d'angles comportant au moins un dispositif d'éclairage (L), un support de graduation (1) avec des zones de graduation de mesure (2) portant des repères de graduation et des zones de repères de référence (RI, RII) portant des repères de graduation, les repères de graduation isolés au moins étant agencés en réseaux de phase, une plaque de lecture (4) portant des zones de lecture (A2, ARI, ARII) de la graduation de mesure (2) et des repères de référence (RI, RII), plusieurs cellules photo-électriques (P1...P6) et un circuit d'exploitation, la disposition géométrique des cellules photo-électriques (P1...P6) qui sont destinées à détecter les rayons diffractés par les repères de graduation (2, $RI_{1...n}$, $RII_{1...n}$) étant adaptée à la longueur d'onde du dispositif d'éclairage (L), à l'orientation et aux caractéristiques de réseau des repères de graduation (2, $RI_{1...n}$, $RII_{1...n}$), caractérisé par le fait que les zones de lecture (A2, ARI, ARII) des zones de repères de graduation et de repères de référence (2, $RI_{1...n}$, $RII_{1...n}$) sont disposées sensiblement symétriquement par rapport à l'axe optique de l'unité d'éclairage (L), que les repères de graduation de la graduation de mesure (2) ont une orientation différente de celle des repères de graduation de zones de repères de référence ($RI_{1...n}$, $RII_{1...n}$), les repères étant de préférence perpendiculaires entre eux, et que la séparation optique des rayons de lecture diffractés par les repères de graduation de la graduation de mesure (2) et les zones de repères de référence ($RI_{1...n}$, $RII_{1...n}$) est opérée par des éléments optiques qui effectuent un déviation transversale par rapport à la direction de mesure et sont associés à la zone de graduation de mesure (A2) et/ou aux zones de lecture de repères de référence (ARI, ARII) de la plaque de lecture.

2. Dispositif selon la revendication 1, caractérisé par le fait que l'élément de déviation optique se présente sous la forme d'un prisme (5).

3. Dispositif selon la revendication 1, caractérisé par le fait que les repères de référence (RI, RII) sont entourés d'une graduation de fond (3).

4. Dispositif selon la revendication 3, caractérisé par le fait que les lignes de réseau des repères de référence (RI, RII) et de la graduation de fond (3) ont la même orientation mais ont des périodes de graduation différentes.

5. Dispositif selon la revendication 1, caractérisé par le fait que les centres des repères de référence (RI, RII) sur le support de graduation (1) sont légèrement décalés les uns par rapport aux autres dans la direction de mesure.

**FIG.1**

**FIG. 2** Einzelheit X

15 µm

2

3

3

RIn

RIIn

RI

RII

6 µm

8 µm

9 µm

RI₁

RII₁

RI

RII

X

3

2

## FIG. 3a

## FIG. 3

## FIG. 3b